# EUROPÄISCHE PATENTANMELDUNG

(11) **EP 2 368 854 A2**
(43) Veröffentlichungstag der Anmeldung: **28.09.2011**
(21) Anmeldenummer: 11002026.0
(22) Anmeldetag: 11.03.2011
(51) Int. Cl.: C03B 19/08, C03B 29/08

(54) **Verfahren zur Herstellung von Produkten aus Schaumglas und anderen Blähstoffen, sowie hergestelltes Produkt und Ofen zur Durchführung des Verfahrens**

(30) Priorität: 17.03.2010 DE 102010011650
(71) Anmelder: Ernst Pennekamp GmbH & Co. OHG, 58256 Ennepetal (DE); Schaumglas Global Consulting GmbH, 97299 Zell am Main (DE)
(72) Erfinder: Hoff, Klaus Uwe, 42499 Hückeswagen (DE); Seidel, Thorsten, 42859 Remscheid (DE)
(74) Vertreter: Patentanwälte Buse, Mentzel, Ludewig

(57) **Zusammenfassung**

Die Erfindung betrifft ein Verfahren zur Herstellung von Produkten aus Schaumglas und anderen Blähstoffen der im Oberbegriff des Anspruchs 1 genannten Art. Das Material (20) liegt anfangs in seiner Rohform als Pulver vor, welches auf ein Transportmittel (12) aufgebracht und durch einen Ofen (10) hindurch geführt wird. Das Material (20) ist dabei in seiner Rohform so beschaffen, dass es unter Temperatureinwirkung ausschäumt und ein Schaumglas entsteht. Der Ofen (10) verfügt über wenigstens eine Wärmequelle (30), die die Luft im Ofen (10) erhitzt. Nach dem Ausschäumvorgang wird das Material (20) so abgekühlt, dass die ausgeschäumte Struktur bestehen bleibt. Die Erfindung schlägt nun vor, die Wärmequelle (30) im Ofen (10) als indirekte Wärmequelle (30) auszuführen. Weiterhin sind im Ofen (10) zumindest ein Lüfter (40) und wenigstens ein Luftkanal (41) angeordnet. Der Lüfter (40) bewegt die erhitzte Luft (33) in dem Luftkanal (41) und der Luftkanal (41) sorgt dafür, dass die erhitzte Luft (33) gleichmäßig zumindest von unten an dem Material (20) vorbeiströmt (42), wobei dieses durch die so erzielte Erwärmung ausschäumt. Weiterhin umfasst die Erfindung ein Schaumglasprodukt, welches nach dem erfindungsgemäßen Verfahren hergestellt wurde. Außerdem umfasst die Erfindung noch einen Ofen (40) zur Durchführung des Verfahrens. Der Ofen (40) besteht dabei aus einem oder mehreren in Reihe angeordneten Abschnitten (15) und besteht insbesondere zumindest im Inneren (11) aus Edelstahl. Jeder Abschnitt (15) verfügt vorzugsweise über zumindest zwei Wärmequellen (30), zwei Luftkanäle (41) und einen Lüfter (40), wobei die Wärmequellen (30) an den gegenüberliegenden Seiten (14) des Ofens (10) angeordnet und jeweils einem Luftkanal (41) zugeordnet sind. Der Lüfter (40) leitet die durch die jeweilige Wärmequelle (30) erhitzte Luft (33) durch den entsprechenden Luftkanal (41). Der Ofen (10) verfügt dabei in seinem Inneren (11) insbesondere über eine Stahlauskleidung und/oder über eine Auskleidung aus mit einem keramischen Material verkleidetem Edelstahl, welche während der Durchführung des Verfahrens Strahlungswärme abgeben kann. Dadurch wird eine gleichmäßigere Temperaturverteilung im Inneren (41) des Ofens (10) erreicht

## Beschreibung

Die Erfindung betrifft ein Verfahren zur Herstellung von Schaumglas und anderen Blähstoffen, sowie das hergestellte Produkt und einen Ofen zur Durchführung des Verfahrens.

Schaumglas findet vielfach Verwendung, insbesondere als Isolierstoff. Dabei wird es überwiegend in zwei verschiedenen Formen hergestellt, nämlich einerseits als Schaumglasschotter, wobei das Schaumglas beispielsweise in ungefähr faustgroße Stücke unterteilt ist und andererseits als Schaumglasplatte oder -block. Welche Form gewählt wird, hängt vom konkreten Anwendungsfall ab.

Zur Herstellung von Schaumglas wird das Rohmaterial, welches üblicherweise aus pulverförmigem oder granuliertem Glas sowie einer Kohlenstoffverbindung besteht, auf ein Transportmittel, wie ein Transportband, aufgebracht. Mit Hilfe des Transportmittels wird das Rohmaterial in einen Ofen gebracht. Durch die dort herrschenden Temperaturen verbrennt das kohlenstoffhaltige Material und setzt dabei Gas frei, was zum Aufschäumen des gesamten Rohmaterials führt. Bei den mit herkömmlichen Öfen durchgeführten Verfahren befinden sich in den Öfen offene Flammen, um die erforderlichen Temperaturen zu erzeugen. Da aber auch das Rohmaterial des Schaumglases isolierend wirkt, muss es auch von unten beheizt werden, um einen vollständigen Ausschäumvorgang zu erzielen. Durch die verwendeten offenen Flammen ergeben sich jedoch mehrere Nachteile. Zum einen herrscht nicht überall im Ofen die gleiche Temperatur vor, was zu einem ungleichmäßigen Aufschäumen und damit zu einem inhomogenen Produkt führt. Zum anderen wird das Transportband durch das Beheizen mit offener Flamme von unten stark in Mitleidenschaft gezogen (sogenannte Hot-Spot-Bildung) und muss so häufiger ausgetauscht werden. Dies ist jedoch teuer und verursacht häufige Stillstände der Anlage, was es ebenfalls zu vermeiden gilt. Durch die ungleichmäßigen Temperaturen im Inneren des Ofens ergibt sich auch ein höherer Energieverbrauch, was teuer und unwirtschaftlich ist.

Aufgabe der Erfindung ist es daher, die vorgenannten Nachteile zu vermeiden und ein Verfahren zur Herstellung von Schaumglas zu entwickeln, welches ressourcenschonend arbeitet und zu einem gleichmäßigen, homogenen Produkt führt. Eine weitere Aufgabe der Erfindung ist es, ein besonders homogenes Produkt herzustellen. Weiterhin Aufgabe der Erfindung ist es, eine Ofenanlage bereit zu stellen, in welcher ein erfindungsgemäßes Verfahren durchgeführt werden kann. Diese Aufgaben werden erfindungsgemäß durch die kennzeichnenden Merkmale der Ansprüche 1, 10 und 11 gelöst, welchen folgende besondere Bedeutung zukommt.

Bei der im Ofen befindlichen Wärmequelle bzw. Wärmequellen handelt es sich um indirekte Wärmequellen. Dies bedeutet, dass sich keine offene ungeschützte Flamme direkt im Innenraum des Ofens befindet. Hierdurch werden der Ofen sowie auch das Transportmittel weniger stark angegriffen. Des Weiteren sind im Ofen zumindest ein Lüfter und wenigstens ein Luftkanal angeordnet. Der Lüfter bewegt dabei die erhitzte Luft im Luftkanal und der Luftkanal selbst ist so beschaffen, dass die erhitzte Luft gleichmäßig zumindest von unten an dem Material bzw. dem Transportmittel vorbeiströmt. Dieses schäumt dabei das Material durch Erwärmung auf.

Durch die Kombination von Lüfter und Luftkanal kann die erwärmte Luft besser im Ofen verteilt werden. So ist es möglich, ein sehr homogenes Schaumglas zu erhalten, da die Temperatur im Ofen deutlich gleichmäßiger ist und somit auch der Ausschäumvorgang homogener durchlaufen wird. Durch die gleichmäßige Verteilung der erwärmten Luft ist auch die Temperatur im Ofen gleichmäßiger. Dies spart Energie. Es ist somit mit dem erfindungsgemäßen Verfahren möglich, ein sehr homogenes Schaumglas herzustellen, wobei für den Herstellungsprozess weniger Energie aufgewendet werden muss und die Apparatur bzw. der Ofen zusätzlich geschont werden. Dies macht das Verfahren preiswerter und wirtschaftlicher.

Die Erfindung umfasst weiterhin auch ein Produkt aus Schaumglas oder einem anderen Blähstoff, welches nach einem der erfindungsgemäßen Verfahren hergestellt wurde.

Des Weiteren umfasst die Erfindung einen Ofen zur Durchführung des erfindungsgemäßen Verfahrens. Der Ofen besteht dabei aus einem oder mehreren in Reihe angeordneten Abschnitten und besteht insbesondere zumindest im Inneren aus Edelstahl. Dabei kann er vollständig aus Edelstahl bestehen oder von innen mit Edelstahl ausgekleidet sein. Auch ein lediglich aus einem Abschnitt bestehender Ofen ist noch von der Erfindung umfasst. In einer bevorzugten Ausführungsform umfasst jeder Abschnitt zumindest zwei Wärmequellen, zwei Luftkanäle und mindestens einen Lüfter, wobei die Anzahl der Lüfter vom konkreten Anwendungsfall abhängig ist und bei Bedarf erhöht werden kann. Die Wärmequellen sind dabei an gegenüberliegenden Seiten des Ofens angeordnet und jeweils einem Luftkanal zugeordnet. Der Lüfter leitet dabei die durch die jeweilige Wärmequelle erhitzte Luft durch den jeweils zugehörigen Luftkanal. Dadurch, dass zwei Wärmequellen an gegenüberliegenden Seiten bezogen auf die Transportrichtung des Transportmittels angeordnet sind, ist eine besonders gleichmäßige Wärmeverteilung innerhalb des Ofens möglich. Wenn nur ein Lüfter benötigt wird, um die Luft beider Wärmequellen durch die jeweiligen Luftkanäle zu leiten, ist die Herstellung besonders ressourcensparend und somit auch preiswerter. Durch die Kombination aus Brennern und Lüftern, kann die Brenneranzahl reduziert und dadurch der Wartungsaufwand minimiert werden. Die Lüfter sind beispielsweise frequenzgeregelt und können dann sehr genau auf den Energiebedarf des Produktionsprozesses eingestellt werden.

In einer besonders bevorzugten Ausführungsform ist der Ofen in seinem Inneren mit einer Stahlauskleidung versehen, welche den Vorteil bietet, zum einen die Isolierung vor dem direkten Kontakt mit dem Blähgut bzw. Schaumglas zu schützen und durch die Strahlungswärme, welche nach innen abgegeben wird, eine besonders homogene Temperaturverteilung für den Blähprozess herbeizuführen. Ein hoher Strahlungsenergieanteil ist dabei vorteilhaft für den Herstellungsprozess und die Qualität des erhaltenen Produktes.

Als indirekte Wärmequellen können sowohl elektrische Heizelemente als auch Brenner mit Brennerrohren dienen. Hierauf wird später noch näher eingegangen werden.

In einem Ausführungsbeispiel wird das Material nach dem Ausschäumen so schnell abgekühlt, dass es durch die beim Abkühlen entstehenden Spannungen zerspringt und Schaumglasschotter bildet.

In einem anderen Verfahren wird das Material nach dem Ausschäumen leicht abgekühlt, damit es seine Form behält und danach langsam, beispielweise in Kühlöfen abgekühlt, so dass die im Material durch den Abkühlprozess entstehenden Spannungen abgebaut werden und Schaumglasplatten bzw. Schaumglasblöcke erhalten werden.

Welches der beiden vorgenannten Verfahren gewählt wird, ist davon abhängig, welches Endprodukt man zu erhalten wünscht.

Während des Ausschäumprozesses wird das Innere des Ofens und somit auch das Material in einer besonders bevorzugten Ausführungsform zumindest bereichsweise auf Temperaturen von 800°C bis 930°C erhitzt. Diese Temperaturen haben sich als besonders vorteilhaft erwiesen, um den Ausschäumprozess vollständig durchzuführen, die Temperaturen aber nicht zu sehr zu erhöhen. Die hohen Temperaturen sind vor allem in den Hauptblähzonen, in denen der Ausschäumungsprozess stattfindet, sinnvoll. Die genaue Temperatur ist abhängig von verschiedenen Faktoren, wie Zusammensetzung und Körnung des Materials in seiner Rohform und gewünschter Qualität des fertigen Produkts.

Der erfindungsgemäße Ofen kann bevorzugt einen oder mehrere in Reihe angeordnete Abschnitt aufweisen. Die einzelnen Abschnitte erlauben dann die Einstellung von individuellen Temperaturen und somit die Einstellung eines definierten Temperaturprofils über die gesamte Länge der Ofenanlage. Dies dient ebenfalls dazu, den optimierten Energiebedarf einzustellen, da in jedem Abschnitt nur die Energie zugeführt werden zu werden braucht, die für den Prozess an dieser Stelle notwendig ist. Besonders vorteilhaft ist es, wenn die einzelnen Abschnitte auf beliebige Temperaturen im Bereich zwischen Raumtemperatur und 930°C einstellbar sind. Hierbei bietet der erfindungsgemäße Ofen den Vorteil, dass die Abschnitte auch zum spannungsfreien Kühlen verwendet werden können, insbesondere bei der Herstellung von Platten oder Blöcken aus Schaumglas oder einem anderen Blähstoff. Hier können somit die gleichen modularen Abschnitte für den geordneten Kühlprozess bei einer Plattenproduktion zur Anwendung kommen. Dies bietet den Vorteil einer einfacheren Bedienung und Ersatzteilhaltung für den Betreiber, was sich kostensparend auswirkt. Die Steuerung für den gesamten Produktionsprozess lässt sich besser aufeinander abstimmen.

Weitere Vorteile und Ausführungsformen der Erfindung ergeben sich aus den Unteransprüchen, der nachfolgenden Beschreibung und den Zeichnungen. In den Zeichnungen ist die Erfindung in zwei Ausführungsbeispielen dargestellt. Es zeigen:
- Fig.1:: Einen erfindungsgemäßen Ofen zur Durchführung des Verfahrens im Schnitt mit Brenner
- Fig. 2:: Eine Ansicht gemäß Fig. 1, wobei als Wärmequelle ein elektrisches Heizelement dient
- Fig. 3:: Ein Abschnitt eines erfindungsgemäßen Ofens gemäß Fig. 1 in Draufsicht
- Fig.4:: Ein Abschnitt eines erfindungsgemäßen Ofens gemäß Fig. 2 in Draufsicht

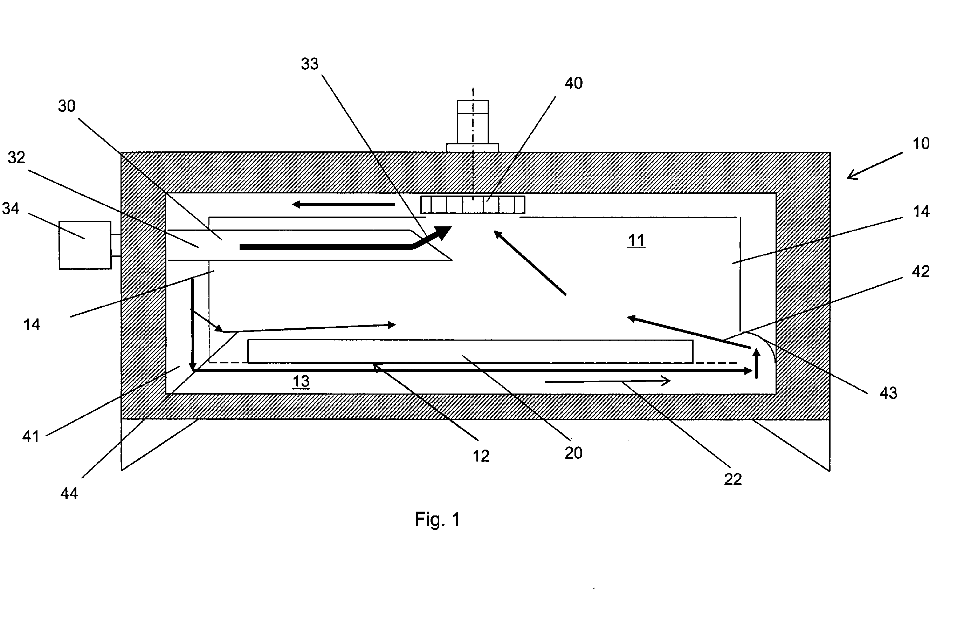

Fig. 1 zeigt einen erfindungsgemäßen Ofen 10 im Schnitt. Das Material 20 ist auf einem Transportmittel 12 angeordnet. Als Wärmequelle 30 dient hier ein Brenner 34, an den ein Brennerrohr 32, welches vorzugsweise aus Edelstahl bzw. aus einem zum Inneren 11 des Ofens 10 hin mit einem keramischen Material verkleideten Edelstahl besteht, angeschlossen ist. Somit ist keine offene, direkte Flamme im Inneren 11 des Ofens 10 vorhanden. Die von dem Brenner 34 erhitzte Luft 33 wird von dem Lüfter 40 angesaugt und in den Luftkanal 41 bewegt, der sich auf der einen Seite 14 des Ofens 10 befindet. Auf der anderen Seite 14 ist der Luftkanal 41 von einem Luftleitblech 43 verschlossen, so dass die Bewegung innerhalb des Luftkanals 41 nur in einer Richtung folgen kann. Der Lüfter 40 bewegt dabei die erhitzte Luft 33 durch den Luftkanal 41 in den Bereich 13 unterhalb des Transportbandes 12 in Querrichtung 22 zur Bewegungsrichtung 21 des Materials 20. Je nach Ausführungsform kann ein kleiner Teil der erhitzten Luft 33 abgezweigt 44 werden, der dann, wie in diesem Ausführungsbeispiel gezeigt, von der einen Seite 14 direkt in das Innere 11 des Ofens 10 strömt, um so das Material 20 auch von oben ausreichend zu erwärmen.

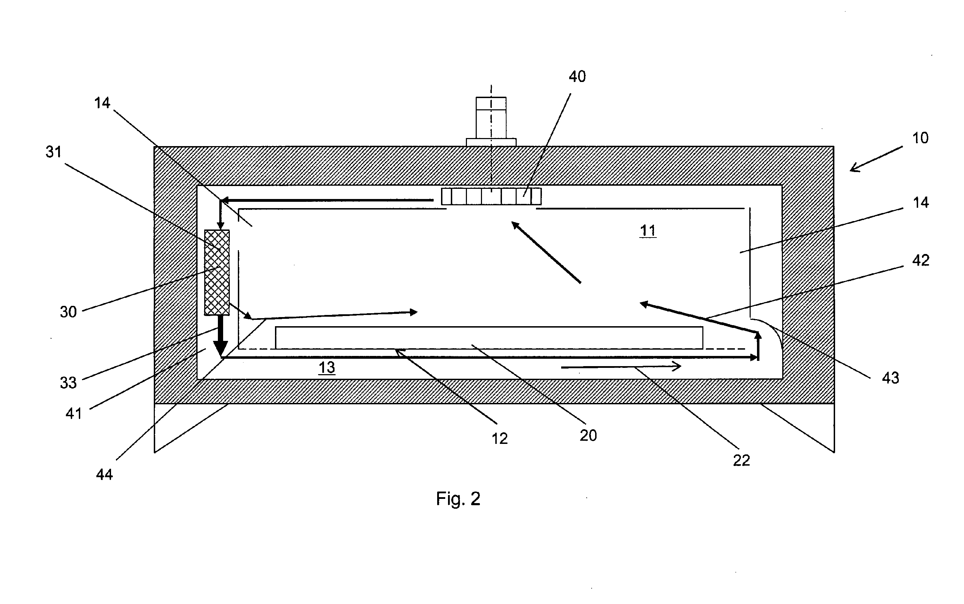

Fig. 2 zeigt einen ähnlichen Aufbau, allerdings mit einer anderen Ausführungsform. Als Wärmequelle 30 dient hier ein elektrisches Heizelement 31. Der Lüfter 40 saugt die Luft aus dem Inneren 11 des Ofens 10 an und leitet diese in den Luftkanal 41. Dort strömt sie an der als elektrisches Heizelement 31 ausgeführten Wärmequelle 30 vorbei und nimmt die erhitzte Luft 33 auf. Im Bereich 13 unterhalb des Transportmittels 12 strömt dann die erhitzte Luft 33 vorbei und erwärmt das Material 20, welches dann ausschäumt. Auch hier wird wieder ein Teil der Luft abgezweigt und strömt oberhalb des Materials 20 über dieses hinweg. Auch die Anordnung der Luftleitbleche 43 ist hier wieder so wie im vorbeschriebenen Ausführungsbeispiel.

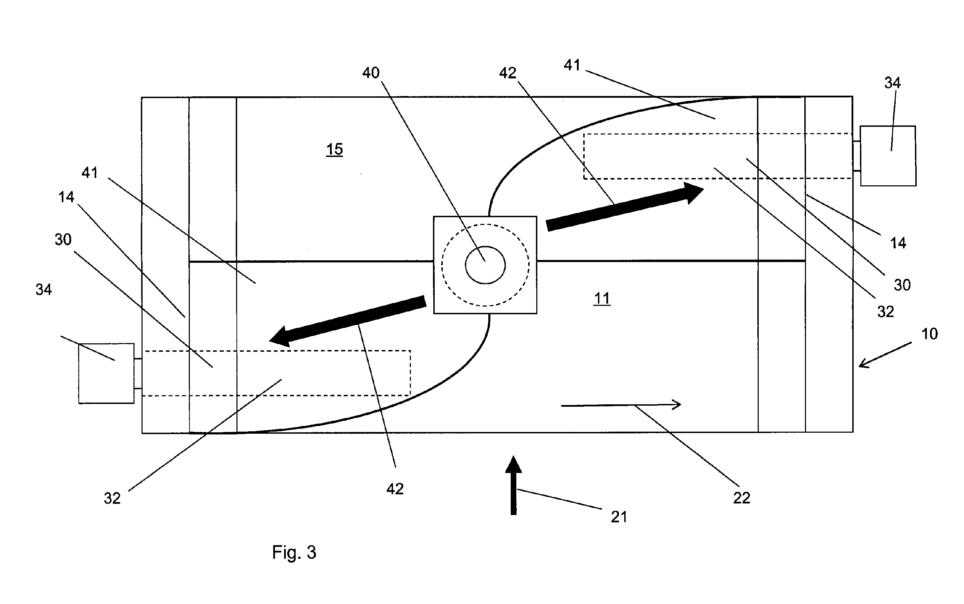

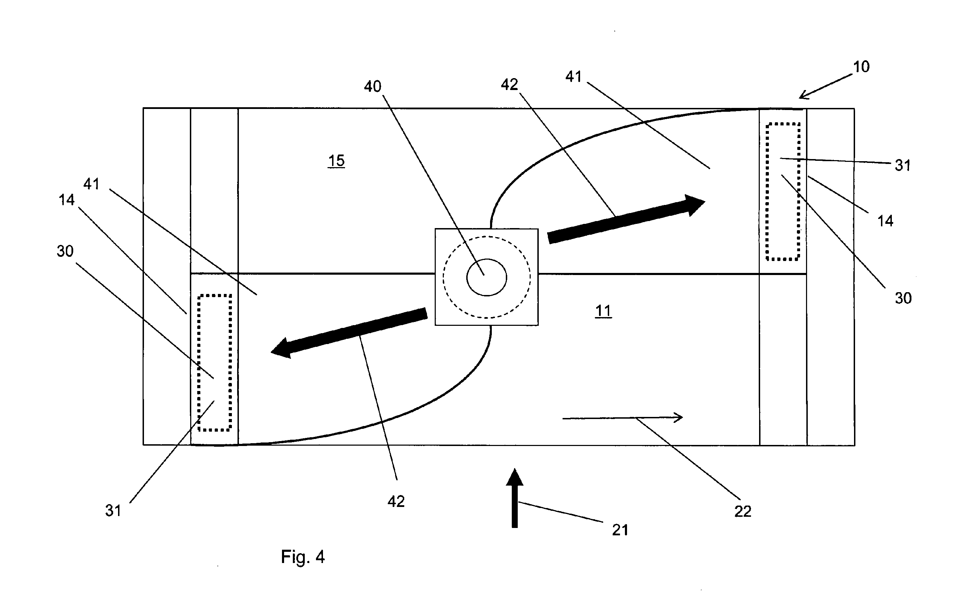

Die Figuren 3 und 4 zeigen jeweils die Öfen 10 aus den Figuren 1 und 2 in Draufsicht. Der Ofen 10 besteht hier jeweils aus mehreren Abschnitten 15, wobei hier jeweils ein Abschnitt 15 dargestellt ist. Der Abschnitt 15 weist jeweils einen Lüfter 50 auf, welcher die Luft in die beiden Luftkanäle 41 leitet. Das Material 20 wird in Richtung des Pfeils 21 durch den Ofen 10 bewegt. Die Luftströmung 42 verläuft unterhalb des hier nicht gezeigten Transportmittels 12 in Querrichtung 22, welche in etwa senkrecht auf die Bewegungsrichtung 21 des Materials 20 steht.

In Fig. 3 ist nunmehr ein Ausführungsbeispiel gezeigt, in welchem als Wärmequelle 30 zwei Brenner 34 mit Brennerrohren 32 dienen. Wie aus Fig. 1 erkennbar, wird die vom Brenner 34 erhitzte Luft 33 vom Lüfter 40 angesaugt und dann in die Luftkanäle 41 geleitet.

Das andere, in Fig. 4 gezeigte Ausführungsbeispiel zeigt als Wärmequelle 30 zwei elektrische Heizelemente 31. Diese sind direkt in den Luftkanälen 41 angeordnet. Die aus dem Inneren 11 des Ofens 10 vom Lüfter 40 angesaugte Luft wird in die Luftkanäle 41 geleitet und strömt dann an den elektrischen Heizelementen 31 vorbei, wo sie die von den Heizelementen 31 erhitzte Luft 33 mitnimmt und somit zu dem Transportmittel 12 bzw. zu dem Material 20 leitet.

In den beiden in den Figuren 3 und 4 gezeigten Ausführungsformen sind die Wärmequellen 30 in Bewegungsrichtung 21 des Materials 20 im Ofen 10 intermittierend angeordnet. In jedem Abschnitt 15 des Ofens 10 ist somit je eine Wärmequelle 30 auf jeder der beiden Seiten 14 angeordnet. Dies hat den Vorteil, dass das Material 20 auch über die Breite des Transportmittels 12 und die Länge des Ofens 10 hinweg gleichmäßig erwärmt wird und so auch homogen ausschäumen kann. Selbstverständlich sind hier auch andere Anordnungen denkbar.

Abschließend sei noch darauf hingewiesen, dass die hier dargestellten Ausführungsformen lediglich beispielhafte Verwirklichungen der Erfindung sind. Diese ist nicht darauf beschränkt. Es sind vielmehr noch Abwandlungen und Abänderungen möglich. So kann beispielsweise auch eine andere indirekte Wärmequelle gewählt werden. Die Anordnung der Wärmequellen im Ofen kann anders erfolgen. Es ist auch nicht notwendig, dass der Ofen aus mehreren Abschnitten besteht. Tut er es doch, so kann der Abschnitt auch eine andere Anzahl an Wärmequellen, Lüftern, Luftkanälen etc. enthalten. Die Wärmequellen und Luftkanäle müssen nicht intermittierend angeordnet sein.

### Bezugszeichenliste:

- 10: Ofen
- 11: Inneres von 10
- 12: Transportmittel
- 13: Bereich unterhalb von 12
- 14: Seiten von 12
- 15: Abschnitt von 10
- 20: Material
- 21: Bewegungsrichtung von 20
- 22: Querrichtung zu 21
- 30: Wärmequelle
- 31: Elektrisches Heizelement
- 32: Brennerrohr
- 33: Erhitzte Luft
- 34: Brenner
- 40: Lüfter
- 41: Luftkanal
- 42: Luftströmung
- 43: Luftleitblech
- 44: Abgezweigter Luftstrom

## Patentansprüche

1. Verfahren zur Herstellung von Produkten aus Schaumglas und anderen Blähstoffen,
wobei das Material (20) anfangs in seiner Rohform als Pulver vorliegt, welches auf ein Transportmittel (12) aufgebracht und durch einen Ofen (10) hindurch geführt wird, wobei das Material (20) in seiner Rohform so beschaffen ist, dass es unter Temperatureinwirkung ausschäumt und ein Schaumglas entsteht
wobei der Ofen (10) über wenigstens eine Wärmequelle (30) verfügt, die die Luft im Ofen (30) erhitzt
und wobei das Material (20) nach dem Ausschäumvorgang abgekühlt wird, so dass die ausgeschäumte Struktur bestehen bleibt,
**dadurch gekennzeichnet,**
**dass** die Wärmequelle (30) im Ofen (10) eine indirekte Wärmequelle (30) ist,
**dass** im Ofen (10) zumindest ein Lüfter (40) und wenigstens ein Luftkanal (41) angeordnet sind,
wobei der Lüfter (40) die erhitzte Luft (33) in dem Luftkanal (41) bewegt und der Luftkanal (41) dafür sorgt, dass die erhitzte Luft (33) gleichmäßig zumindest von unten an dem Material (20) vorbeiströmt (42), wobei dieses durch die Erwärmung ausschäumt.

2. Verfahren nach Anspruch 1, **dadurch gekennzeichnet, dass** der Ofen (10) in seinem Inneren (11) über eine Stahlauskleidung verfügt, welche während der Durchführung des Verfahrens Strahlungswärme abgeben kann und dadurch für eine gleichmäßigere Temperaturverteilung im Inneren (11) des Ofens (10) sorgt.

3. Verfahren nach Anspruch 1 oder 2, **dadurch gekennzeichnet, dass** als Wärmequelle (30) ein oder mehrere elektrische Heizelemente (31) dienen.

4. Verfahren nacheinem der Ansprüche 1 bis 3, **dadurch gekennzeichnet, dass** als Wärmequelle (30) ein oder mehrere Brenner (34) dienen, wobei die Flamme des Brenners (34) sich in einem vorzugsweise aus Edelstahl bestehenden Brennerrohr (32) befindet.

5. Verfahren nach einem der Ansprüche 1 bis 4, **dadurch gekennzeichnet, dass** der Lüfter (40) die Luft aus dem Inneren (11) des Ofens (10) ansaugt, dann an der Wärmequelle (30) vorbei und dann weiter in den Luftkanal (41) bewegt.

6. Verfahren nach einem der Ansprüche 1 bis 5, **dadurch gekennzeichnet, dass** die erhitzte Luft (33) unterhalb des Transportmittels (12) quer (22) zur Bewegungsrichtung (21) des Materials (20), insbesondere intermittierend von jeder der beiden Seiten (14), strömt (42).

7. Verfahren nach einem der Ansprüche 1 bis 6, **dadurch gekennzeichnet, dass** das Material (20) auf eine Temperatur von ca. 800 - 930 °C erhitzt wird um das Ausschäumen durchzuführen.

8. Verfahren nach einem der Ansprüche 1 bis 7, **dadurch gekennzeichnet, dass** ein Teil der Luftströmung (42) abgezweigt (44) und von oben über das Material (20) geleitet wird.

9. Produkt aus Schaumglas oder einem anderen Blähstoff hergestellt nach einem oder mehreren der Verfahren nach Anspruch 1 bis 8.

10. Ofen (10) zur Durchführung des Verfahrens nach einem oder mehreren der Ansprüche 1 bis 8, **dadurch gekennzeichnet, dass** der Ofen (10) aus einem oder mehreren in Reihe angeordneten Abschnitten (15) besteht und insbesondere zumindest im Inneren (11) aus Edelstahl besteht, wobei vorzugsweise jeder Abschnitt (15) über zumindest zwei Wärmequellen (30), zwei Luftkanäle (41) und einen Lüfter (40) verfügt, wobei die Wärmequellen (30) an gegenüberliegenden Seiten (14) des Ofens (10) angeordnet und jeweils einem Luftkanal (41) zugeordnet sind und der Lüfter (40) die durch die jeweilige Wärmequelle (30) erhitzte Luft (33) durch den jeweiligen Luftkanal (41) leitet (42), wobei der Ofen (10) in seinem Inneren (11) insbesondere über eine Stahlauskleidung und/oder über eine Auskleidung aus mit einem keramischen Material verkleidetem Edelstahl verfügt, welche während der Durchführung des Verfahrens Strahlungswärme abgeben kann und dadurch für eine gleichmäßigere Temperaturverteilung im Inneren (11) des Ofens (10) sorgt.

11. Ofen (10) zur Durchführung des Verfahrens nach einem der Ansprüche 1 bis 8 und/oder nach Anspruch 10, **dadurch gekennzeichnet, dass** der Ofen (10) aus mehreren Abschnitten (15) besteht, wobei in jedem Abschnitt (15) eine Temperatur im Bereich zwischen Raumtemperatur und 930°C einstellbar ist.
